Europäisches Patentamt

European Patent Office

Office européen des brevets

(11) Publication number: **0 391 328**
**A2**

## (12) EUROPEAN PATENT APPLICATION

(21) Application number: **90106328.9**

(22) Date of filing: **03.04.90**

(51) Int. Cl.⁵: **G01S 17/06, G01S 7/48**

A request for addition has been filed pursuant to Rule 88 EPC. A decision on the request will be taken during the proceedings before the Examining Division (Guidelines for Examination in the EPO, A-V, 2.2).

(30) Priority: **03.04.89 IT 4780989**

(43) Date of publication of application:
**10.10.90 Bulletin 90/41**

(84) Designated Contracting States:
**AT CH DE FR GB LI NL SE**

(71) Applicant: **SISTEL SISTEMI ELETTRONICI S.P.A.**
**Via Tiburtina 1210**
**Roma(IT)**

(72) Inventor: **Brogi, Giulio**
**Via San Valentino, 32**
**I-00137 Roma(IT)**
Inventor: **Pietranera, Luca**
**Vicolo Della Minerva, 2**
**I-00137 Roma(IT)**

(74) Representative: **Gustorf, Gerhard, Dipl.-Ing.**
**Patentanwalt Dipl.-Ing. Gerhard Gustorf**
**Bachstrasse 6 A**
**D-8300 Landshut(DE)**

(54) **Obstacle detection and warning system particularly well suited for helicopter applications.**

(57) Obstacle detection and warning system which in the following we shall refer to as OWS (Obstacle Warning System) consisting of a Nd:YLF laser emitter pumped by laser diodes which scans the surrounding space by means of an acousto-optical deflector. The radiation reflected by an obstacle is received by a silicon avalanche sensor; signal processing provides warning and range of the obstacle detected.

The obstacles which are detected are presented upon a display where range is coded in terms of shades of gray or colours according to the graphic capabilities of the system in positions which correspond to the laser beam position in relation to the optical axis.

The system is particularly well suited for flight by night and/or at very low altitude by a rotating wing type of aircraft and it is capable of detecting an obstacle having the dimensions of an electrical cable (3 mm section) even if the cable is not crossed by any current (and therefore is not heated due to Joule effect).

Fig. 1

## Obstacle detection and warning system particularly well suited for helicopter applications

The invention presented in the following regards a system for the dectection and warning of obstacles which utilises a pulsed Laser and which finds its best application on rotating wing aircraft. Such system consists of a Nd:YLF solid state Laser modulated at a frequency of about 10 kHz. The radiation emitted is in the near infrared range (1045 nm).

The beam direction is determined by an acousto-optical deflector in TeO3 which can be controlled electronically.

A negative focal device at the modulator output makes the maximum deflection angle stretch from the usually possible + - 1.5 deg. with existing deflectors to up to + -10 deg.

The reflected radiation is received by an avalanche silicon sensor placed in the focus of a refractive gathering optical device.

The electronics consist basically of an amplifier, an adapted electronic filter, and a/d converter, with indicative performance of 8 bit resolution and a sampling speed of 50 Mega samples per second, a processing system which determines the time relationship of events to determine the range of the obstacle and its rough equivalent dimensions .

The operator interface consists in a raster scan type of graphics for data display by coding range in shades of gray.

The first pulse detection logic is adopted to highlight any possible obstacle (such as a cable) against a reflective

The system, as we have said from the onset, finds its main application in the low altitude flight of rotating wing aircraft; it makes possible the detection of obstacles even in the presence of low visibility conditions (such as at night).

For integration on board the helicopter the system requires an interface towards the on board instrumentation which determine the aircraft ground speed (anemometer and altimeter) so as to fix the system optical axis with sufficient accuracy onto the direction of approach. It is also possible to take into account a slight vertical offset to take into account the different manoeuvrability of the aircraft in the different directions.

The Laser beam leaves the deflection system described above with a divergence angle Phi L.

The areacovered by the beam at range D shall therefore be equal to :

$$A_L = (\theta_L \cdot D)^2 \cdot \pi/4$$

which is valid for small values of Phi.

The reflected radiance for a small obsacle of area Ao s t< = A $_L$ shallbe:

$$H_{rifl} = \beta \cdot \tau_{atm}2 \cdot A_{ost} \cdot P/(\pi \cdot A_L \cdot D^2)$$

where Beta is the obstacle reflectivity, Tau a t m the atmosphere trasmissivity between sensor and obstacle and P is the Laser beam power.

By introducing the characteristics of the Nd:YLF pulsed laser and considering the power collected by a sensor equipped with an optical device, it results that the system can detect at a S/N ratio greater than 10 a low reflectivity (Beta = 0.1) 3mm dia. cable at a range of 300 m. Such S/N ratio may be further improved by integrating more than one pulse.

The scan pattern is preferably as shown in Figure 5, so as to sweep the following in succession:
the entire centre square having angle aperture of + -3 deg.
two diagonal lines at 20 deg
two straight orthogonal lines at 20 deg.
a contour around the centre (10 deg side).

The typical pulse repetition frequency of Nd/YLF lasers pumped by laser diodes and modulated by Q-switching, is 10 kHz; this arrangement is such that the region of interest can be covered in 1/6 th of a second, or to cover the entire area in a second by sending six pulses per surface element, so as to achieve an improvement of the S/N ratio by a factor 2.45, so that the system is useable at full performance even in the case of poor visibility (500 m.).

The OWS system presented offers an indisputable advantage compared to passive systems,consisting of image sensors operating in the visible or thermal infrared regions.

Laser scanning provides greater accuracy and spacial resolution,detecting objects indipendentle of the temperature difference, as in the case of thermal imaging, or colour TV against a given back ground.

It is furthermore important to note that the laser based system provides an accurate evaluation of the obstacle range and an estimate of its equivalent area, so as to make possible a classification of the seriousness of the potential danger.

Active systems adopting a Nd:YAG diode pumped laser, compared to a Nd:YAG or CO2 laser, provides savings in terms of weight, dimensions and costs, yet increasing system reliability.

Due to the limited transmitted power, the equipment is difficult to detect by Laser Warning equipment.

For illustrative and non limitig purposes, the invention will now be described based on the figures enclosed.

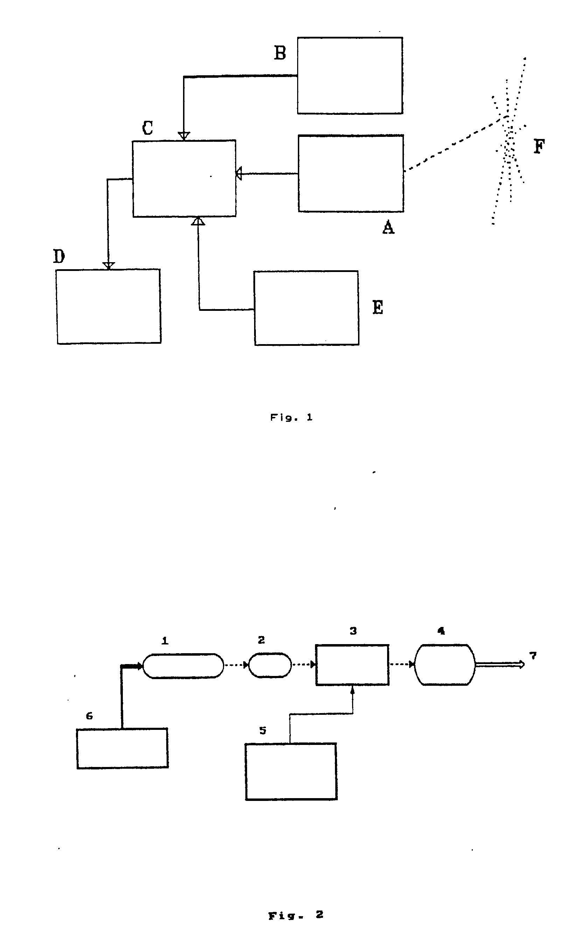

Figure 1 shows the block diagram of the OWS equipment, whwre we can see:

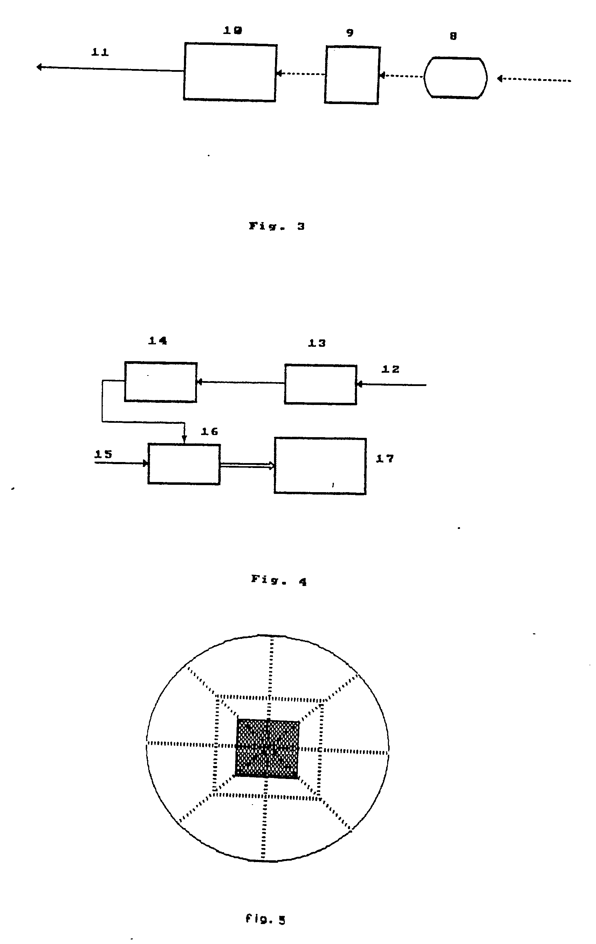

A Laser subassembly (expanded in Figure 3)

B Detector subassembly (expanded in figure 4)

D Equipment display

E Aircraft navigation instrumentation

F Simplified scan pattern.

Figure 2 shows the schematic of the emitter indicated as A in Figure 1. It consists of:

1 Nd:YLF bar

2 Beam expander

3 Acousto-optical deflector

4 Negative focal optics

5 A-O deflector electronic unit

Figure 3 shows the schematic of the receiver indicated as B in figure 1. It consists of:

8 Collector optics

9 Inteferential optical filter

10 Avalanche silicon sensor

11 Connection to the electronics.

Figure 4 shows the schematic of the processing electronics indicated as C in figure 1. It consists of:

12 Radiation reflected by a possible obstacle

13 Preamplifier

14 A/D converter

15 Timebase reference

16 Timing

17 Aircraft display.

Figure 5 shows a schematic of the area covered by the laser scan pattern.

In the following we shall described in detail the operation of the equipment for illustrative, non limiting purposes. The Nd:YLF laser 1 pumped by diodes 6 emits a pulse which enters a beam expander 2 and is deflected by an acousto-optical modulator 3. The maximum deflection angles for such equipment are of the order of 2-3 degrees; to cover a 20 deg. area it is therefore required to amplify such angle by means of a diverging optics 4.

Scanning is performed by the method shown in Figure 5; this makes possible the detection of a cable in the field of view, preferably set at 20 deg., so as to complete an entire scan in a time considerably shorter than required for an integral coverage of the field of view.

In the calculation of the time required we have catered for a reasonable 30-40% overlap between one single unit area covered by the laser beam during one scan and the next.

The signal received by a refractiveoptics 8, with a diameter preferably between 50 and 100 mm,is filtered by an interferential filter 9 centered on the laser emitted wavelength.

Signal detection is performed by means of an avalanche photo diode 10.

The amplified and filtered signal 13 passes through the A/D converter 14, with an adaptive threshold which discriminates the desired signals and sends a stop pulse to timing 16 previously triggered by the laser pulse transmitted 15.

The warning with range indication is presented in the mode described on the aircraft display 17.

In conclusion, the main feature of the invention is in the fact that it includes an Nd:Glass laser (in particular Nd:YLF), pumped by diodes, which provides sufficient optical power yet offers reduced dimensions and weight, an acousto-optical deflector, with deflection angle amplified by a diverging optics performing an analysis of the signal received for obstacle detection and measurement of its range.

## Claims

1. Obstacle Detector and Warning System for application on rotating wing aircraft, essentially made up of the following:
-Laser source (A)
-Receiver for the reflected radiation (B)
-Electronic signal detector and processor (C)

2. Obstacle Detector and Warning System preferably applied to rotating wing aircraft, as per claim 1, where the radiation is produced by a Nd:YLF laser pumped by diodes (1),(6) and is fed into a beam expander (2).

3. Obstacle detector and Warning System, preferably for application on rotating wing aircraft, as per claims 1 and 2, equipped with an acousto-optical deflector (3),(5) where the original deflection angle isamplified by a negative focus optics (4).

4. Obstacle Detector and Warning System preferably to be applied to rotating wing aircraft as per claims 1, 2 and 3, with a collecting optics (8) and an interferential filter (9) and a sensor (10).

5. Obstacle warning system preferably to be used for rotating wing aircraft as per previous claims, where the electronics (C) include a preamplifier (13) an A/D converter (14) and a timing unit (16) capable of measuring the different phase relationship between the pulse sent and the one received.

Fig. 1

Fig. 2

Fig. 3

Fig. 4

fig. 5